Europäisches Patentamt

(19) European Patent Office

Office européen des brevets

(11) Publication number: **0 207 576 B1**

# EUROPEAN PATENT SPECIFICATION

(45) Date of publication of patent specification: **03.04.91**

(51) Int. Cl.⁵: **G01B 5/18**, E21B 47/02, E21B 7/18

(21) Application number: **86201169.9**

(22) Date of filing: **02.07.86**

(54) Apparatus for determining the positioning and measuring the depth, on which a construction or object is positioned in the ground.

(30) Priority: **05.07.85 NL 8501930**

(43) Date of publication of application:
**07.01.87 Bulletin 87/02**

(45) Publication of the grant of the patent:
**03.04.91 Bulletin 91/14**

(84) Designated Contracting States:
**BE DE GB NL**

(56) References cited:
**NL-A- 7 302 241
US-A- 3 620 457
US-A- 3 690 166
US-A- 3 938 600
US-A- 4 433 737**

**JAPAN TELECOMMUNICATIONS REVIEW, vol.
21, no. 4, October 1979, pages 350-354, The
Telecommunications Association, Tokyo, JP;
S. TAKASHIMA et al.: "Conduit buried depth
measuring equipment"**

(73) Proprietor: **T.A.B. Advies en Konstruktieburo
B.V.
No. 13 Marconistraat
NL-6716 AK Ede(NL)**

(72) Inventor: **Heyink, Johan Reinier
H.L. Rudolfstraat 68
NL-7271 WJ Borculo(NL)**

(74) Representative: **Schumann, Bernard Herman
Johan et al
OCTROOIBUREAU ARNOLD & SIEDSMA
Sweelinckplein 1
NL-2517 GK The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a probe for determining the position and measuring the depth, on which a cable, conduit or other construction or object is positioned in the ground, said probe being hollow and elongate like a tube or pipe, the one end of said probe to be connected with a source of medium under pressure, said probe being provided with measuring means connected thereto and suitable for measuring the distance, over which the other end of said probe is brought into the ground.

Such a probe is known from US-A-4 433 737. This prior art specification discloses a probe comprising a pipe-like operative lower end and means suitable for measuring the distance, over which that end of the probe is brought into the ground.

The probe according to the invention is characterized by an external enlargement forming an integral part of the probe wall at said other end.

This feature according to the invention has the effect that the ground material to be transported away is removed more easily, whilst furthermore the removing of the probe, if necessary after de-energizing of the source of medium under pressure, can take place very easily.

It is noted that NL-A-7 302 241 discloses a drilling tool provided with a tubular member carrying an outer ring arranged with a free space relative to the pipe outer wall. The pipe as well as the ring are provided with cutting teeth serving the purpose of cutting through the soil by rotatably driving the tool. As a result of such construction the ring cuts into the ground loosening a cylindrical ground portion, which is subsequently blown away by the gas under pressure supplied through the tube. This construction does not ensure a ready removal of the probe after its penetration in the ground. As a result of the presence of the cutting ring the user will have to apply a considerable effort to penetrate into the ground.

Particularly the enlargement may be generally spherically shaped.

For position-determining and probing in clay advantageously use may be made of an alternative embodiment, in which the enlargement is provided with a cutting edge at its peripheral edge directed to said other end. In this way it is ensured that sufficient space is maintained for further bringing into the ground of the probe, whilst sticking and jamming of the probe in the clay-ground is not or hardly likely to occur.

In the case in which water would be used as depressurized medium it can not be avoided that a muddy zone forms around the probe. Sometimes this may be undesirable. In view thereof advantageously use may be made of a probe connected with a source of pressurized air as pressure medium.

In order to have the fluidization of the ground material to be removed to take place as effectively as possible while using as small as possible a quantity of medium preferably use is made of adjusting means for adjusting the medium flow.

Very simple is that embodiment, in which the measuring means are designed as a scale on the outer surface of said probe.

Also use may be made of an embodiment in which the measuring means comprise a pressure sensor arranged at said other end of the probe. The sensor measures the pressure of the medium at the outflow end of the probe. This pressure is, in connection with the ground condition, representative of the depth reached.

In an embodiment in which said probe exhibits an internal constriction at said other end an acceleration of the medium flow takes place contributing to the effectivity of loosening the ground material.

The probe may during operation by the user lightly be moved up and down and guided. The medium fed through, particularly the air, performs the actual job. The up and down movement is particularly important in case of harder sand layers; in case of somewhat softer sand layers this up and down movement is not necessary.

The probe may be designed as a tube made of high-quality steel, the inner diameter and the outer diameter of which can be chosen in dependence upon its length.

The advantages of the probe according to the invention can be summarized as follows. Only a very small force is necessary for bringing the probe into the ground. In particular for continuous operation this is of utmost importance.

Since the muscle power to be applied is small, the danger of damaging the underground construction or the object is practically zero. In particular the probe according to the invention is accordingly very suitable for localizing synthetic resin conduits, that are readily damaged with e.g. the drilling tool disclosed in NL-A-7 302 241 discussed above.

The probe according to the invention allows a quick measurement or a large number of measurements within a given time interval.

The invention will now be explained with reference to the drawing of some arbitrary embodiments.

In the drawing:

Figure 1 is a schematic representation of a first embodiment of a probe, which is shown in longitudinal section;

figure 2 is a perspective view of a probe in a different embodiment; and

figure 3 is a longitudinal section of a detail, namely the lower or foremost end of an alternative embodiment.

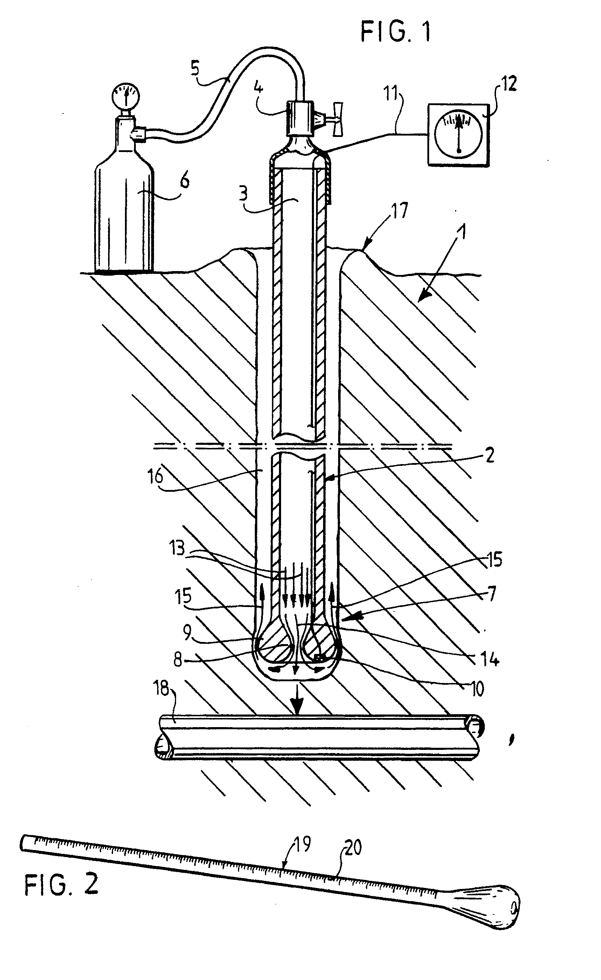

Figure 1 shows in longitudinal section a hollow elongate probe 2 brought partly into the ground 1, the upper end 3 of the probe 2 remaining overground being connected through a conduit 5 provided with a control valve 4, with a pressure-air cylinder 6, which in an alternative embodiment may be replaced by a compressor.

Probe 2 is provided, at its lower end 7, that has to be brought into the ground, with an internal constriction 8 and an external enlargement 9.

Also the lower end is provided with a pressure senor 10, tht is, through a conduit 11, connected with a measuring apparatus 12 that determines the relation between the pressure measured by sensor 10 and the depth, on which the sensor 10 is positioned.

Arrows 13 indicate the undisturbed medium flow in probe 2. Arrows 14 refer to the constricting medium flow at the constricting end, and at last arrows 15 indicate the way, in which the medium after leaving the probe and conveying ground material is drained off through the space 16 having the shape of a cylinder surface, the diameter of which approximatily corresponds to or is a little larger than the diameter of the enlargement 9. Around probe 2 the ground material transported away will cumulate. The annular raised zone on the ground is referred to with reference 17.

Probe 2 can be pushed into the ground with a very small force. As soon as the user feels that the lower end of probe 2 touches e.g. a conduit 18, he reads, on measuring apparatus 12, the depth, on which the end of the probe is positioned underground.

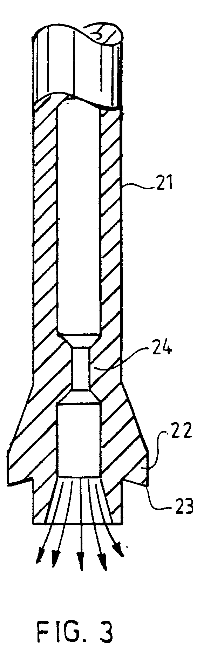

Figure 2 shows a measuring probe 19 of a simpler type, the shape of which corresponds with probe 2 according to figure 1, which, however, is not provided with the pressure sensor 10 and conduit 11 for determining the depth, but the outer surface of which is provided with a scale 20, by means of which the user can read directly the depth, on which the lower end of probe 9 is positioned at the moment, on which it touched a construction or a object.

Figure 3 shows a probe 21 provided with an enlargement 22 at its foremost end, which is provided with a cutting edge 23 at its peripheral edge directed to said foremost end.

In the probe 21 a ring 24 is present causing a constriction of the passage. This constriction is positioned a little rearwardly relative to the foremost end. This embodiment is particularly intended for position-determination and measuring in clay-ground.

**Claims**

1. Probe (2) for determining the position and measuring the depth, on which a cable, conduit (18) or other construction or object is positioned in the ground (1), said probe (2) being hollow and elongate like a tube or pipe, the one end (3) of said probe (2) to be connected with a source (6) of medium under pressure, said probe being provided with measuring means (20) connected thereto and suitable for measuring the distance, over which the other end (7) of said probe (2) is brought into the ground (1),
characterized by an external enlargement (9) forming an integral part of the probe (2) wall at said other end (7).

2. Probe according to claim 1, characterized in that said enlargement (9) has a general spherical shape.

3. Probe according to claim 1, characterized in that said enlargement (22) is provided with a cutting edge (23) at its peripheral edge directed to said other end (7).

4. Probe according to anyone of the preceding claims, cha racterized in that the probe (2) is connected with a source (6) of air under pressure.

5. Probe according to anyone of the preceding claims, cha racterized by adjusting means (4) for adjusting the medium flow.

6. Probe according to anyone of the preceding claims, cha racterized in that said measuring means are in the form of a scale (20) on the outer surface of said probe (2).

7. Probe according to anyone of the preceding claims, cha racterized in that said measuring means comprise a pressure sensor (10) arranged at said other end (7).

8. Probe according to anyone of the preceding claims, cha racterized in that said probe exhibits an internal constriction (8) at said other end (7).

**Revendications**

1. Sonde (2) pour déterminer la position et mesurer la profondeur à laquelle un câble, une canalisation (18) ou autre construction ou objet est placé dans le sol (1), ladite sonde (2) étant creuse et allongée comme Un tube ou un tuyau, une extrémité (3) de ladite sonde (2) étant raccordée à une source (6) d'un milieu sous pression, ladite sonde étant munie de moyens de mesure (20) qui lui sont connectés et qui sont adaptés pour mesurer la distance, à laquelle l'autre extrémité (7) de ladite sonde (2) est amenée dans le sol (1), caractérisée par un renflement externe (9) faisant partie intégrante de la paroi de la sonde (2) à ladite autre extrémité (7).

2. Sonde selon la revendication 1, caractérisée en ce que ledit renflement (9) a une forme générale sphérique.

3. Sonde selon la revendication 1, caractérisée en ce que ledit renflement (22) est muni d'une arête coupante (23) sur son bord périphérique dirigé vers ladite autre extrémité (7).

4. Sonde selon l'une quelconque des revendication précédentes, caractérisée en ce que la sonde (2) est raccordée à une source (6) d'air sous pression.

5. Sonde selon l'une quelconque des revendications précédentes, caractérisée par des moyens de réglage (4) pour régler le débit du milieu.

6. Sonde selon l'une quelconque des revendications précédentes, caractérisée en ce que lesdits moyens de mesure sont sous forme d'une graduation (20) sur la surface extérieure de ladite sonde (2).

7. Sonde selon l'une quelconque des revendications précédentes, caractérisée en ce que lesdits moyens de mesure comprennent un détecteur de pression (10) agencé à ladite autre extrémité (7).

8. Sonde selon l'une quelconque des revendications précédentes, caractérisée en ce que ladite sonde présente un rétrécissement intérieur (8) à ladite autre extrémité (7).

**Ansprüche**

1. Sonde (2) zur Ermittlung der Lage und zur Messung der Tiefe eines im Boden (1) liegenden Kabels, einer Leitung (18) oder einer anderen Konstruktion, oder eines Gegenstandes, wobei die Sonde (2) hohl und ähnlich einem Rohr langgestreckt ausgebildet ist und ein Ende (3) der Sonde (2) an eine Quelle (6) eines unter Druck stehenden Mediums angeschlossen ist und wobei die Sonde an eine Meßeinrichtung (20) angeschlossen ist, die geeignet ist die Entfernung zu messen, über die das andere Ende (7) der Sonde (2) in den Boden (1) eingeführt ist, gekennzeichnet durch eine äußere Ausweitung (9), die einen integralen Bestandteil der Wand der Sonde (2) an dem anderen Ende (7) bildet.

2. Sonde nach Anspruch 1, dadurch gekennzeichnet, daß die Ausweitung (9) allgemein kugelförmig gestaltet ist.

3. Sonde nach Anspruch 1, dadurch gekennzeichnat, daß die Ausweitung (22) mit einem Schneidrand (23) an ihrem nach dem anderen Ende (7) hin gerichteten Umfangrand vrsehen ist.

4. Sonde nach einem der vorhergehenden Ansprüche, dadurch gekennzeichnet, daß die Sonde (2) mit einer Druckluftquelle (6) in Verbindung steht.

5. Sonde nach einem der vorhergehenden Ansprüche, gekennzeichnet durch Einstellmittel (4) zur Einstellung des Medienflusses.

6. Sonde nach einem der vorhergehenden Ansprüche, dadurch gekennzeichnet, daß die Meßeinrichtung eine Skala (20) auf der äußeren oberfläche der Sonde (2) aufweist.

7. Sonde nach einem der vorhergehenden Ansprüche, dadurch gekennzeichnet, daß die Meßeinrichtung einen Drucksensor (10) aufweist, der am anderen Ende (7) angeordnet ist.

8. Sonde nach einem der vorhergehenden Ansprüche, dadurch gekennzeichnet, daß die Sonde an dem anderen Ende (7) eine Einschnürung (8) aufweist.

FIG. 1

FIG. 2

FIG. 3